# EUROPEAN PATENT SPECIFICATION

(11) **EP 4 457 287 B1**
(45) Date of publication and mention of the grant of the patent: **03.09.2025**
(21) Application number: 22850606.9
(22) Date of filing: 30.12.2022
(51) Int. Cl.: C09D 5/02, C09D 7/65, C09D 7/80, C09D 129/04, C09D 167/00

(54) **PAINTING PRODUCT AND PROCESS FOR MAKING A PAINTING PRODUCT**
LACKIERPRODUKT UND VERFAHREN ZUR HERSTELLUNG EINES LACKIERPRODUKTS
PRODUIT DE PEINTURE ET PROCÉDÉ DE FABRICATION ASSOCIÉ

(30) Priority: 31.12.2021 IT 202100033188
(43) Date of publication of application: 06.11.2024
(73) Proprietor: Aliquid S.r.l., 70123 Bari (BA) (IT)
(72) Inventor: BEDON, Andrea, 35136 Padova (PD) (IT); BIANCHI, Alberto, 20148 Milano (MI) (IT); DE MARZO, Giacomo Antonio, 70044 Polignano a Mare (BA) (IT)
(74) Representative: Gallo, Luca
(86) International application number: PCT/IB2022/062915
(87) International publication number: WO 2023/126886

(56) References cited:
- EP-A1- 3 875 545
- CN-A- 113 617 305
- KR-A- 20210 111 188
- US-A1- 2007 088 099
- US-B1- 6 410 096

## Description

### Field of application

The present invention regards a painting product and a process for making a painting product according to the preamble of the respective independent claims.

The present product and process are generally inserted in the industrial field of production of paints, varnishes, lacquers, enamels, base coats, finishes for treating surfaces and, more generally, in the chemical industry field.

The painting product is therefore advantageously intended to be used for producing a covering, in particular atoxic and biodegradable, on different types of supports made of stonework, metal, wood or plastic materials, such as for example external and internal surfaces of houses, railings, fences, ship hulls, structures exposed to the marine environment, etc.

### State of the art

In the field of production of painting products, it is known to mix different chemical substances in order to obtain mixtures (termed differently based on the use and their characteristics) which when applied on a surface are capable of producing a coating which protects the same from corrosion, abrasion and generally from the attack of chemical, physical and biological agents, and in some cases also for conferring an improve aesthetic appearance.

Such painting products are composed of four types of components: solvents for conferring the liquid form, binders or their precursors for providing structural support, additives for conferring further properties and possibly colored pigments and fillers.

In particular, the polymer binders are essential in the painting product, while the solvents may in some cases not be present, such as for example in the case of powder spray paints.

In addition, in place of a solvent or in combination therewith, a dispersing means can be used, as in the case of paints with watery base, in which the binder (and in some case also a solvent) is suspended within an aqueous dispersive phase.

The additives are substances added for conferring desired properties to the final composition that the binder on its own does not possess, and for example they can have the functions of plasticizing agent, antioxidant, UV protection, antifouling, drying accelerant. The components of each painting product change depending on the surface to be covered and on the type of protection that it is necessary to impart, i.e. the type of agents against which it is necessary to protect the material.

In the case of applications on metallic surfaces, painting products generally carry out a barrier effect that is impermeable to water and oxygen in order to prevent the corrosion, and in some cases, for example in the anticorrosive primers, they can also contain metal ions that form a thin anticorrosion layer on such surfaces.

In addition, in the case of application for the purpose of antifouling, i.e. for preventing or limiting biological encrustation (biofouling), e.g. in marine environments, the painting products can be based on two main mechanisms: the killing of the organisms that cause the encrustation or the automatic detachment of the encrustation itself (physical antifouling mechanism).

In particular, the painting products which exploit the first mechanism contain and progressively release an active principle termed "biocide" that kills the species of microorganisms that are in contact therewith. Such biocide can for example be an enzyme (eco-compatible secondary biocide) or a metal such as copper or zinc. Otherwise, painting products which exploit the second mechanism make use of anti-adherence, i.e. they are capable of preventing the marine microorganisms from adhering and stratifying in a strong manner to the coating. For example, in the case of nautical applications, the painting products are designed in a manner such that the mere movement of the boat beyond a certain speed causes the detachment of the encrustation. The above-described painting products have in practice shown that they do not lack drawbacks. A first drawback of the painting products lies in the fact that in most of the cases they are toxic for those who use them, since as solvents they contain volatile organic compounds that are health damaging. For this reason, the operators must generally make use of suitable protection devices during the use of such products, in particular in order to avoid breathing in the aforesaid compounds.

A further drawback of the painting products lies in the fact that their degradation in the long term involves considerable environmental impact. Indeed, their useful lifetime, in particular for anticorrosion and antifouling purposes, is not infinite and the material constituting the coating ages and degrades, releasing fragments into the environment. This is a problem tied to the substances constituting the painting product of the coating, which include crosslinked polymers that are hard to degrade, heavy metals and organic molecules used as additives for different objects (increasing UV resistance, mechanical strength, various catalysts, pigments) and damaging for the environment.

Such drawback is substantially manifested in any type of painting product, since the abovementioned substances are still present independent of the solvent used. This is thus verified also with paints lacking volatile organic components.

More in detail, the environmental impact of the painting products of known type can be seen in the damage to land, aquatic and marine ecosystems due to the dispersion in water and in the ground of microparticles and microplastics constituted by polymers of fossil origin used as binders. In particular, such particles that are extraneous to the ecosystems enter within the food chain, causing damage to the organisms on all levels thereof, human beings included.

In addition, particular damage to aquatic ecosystems is encountered following the dispersion and deposition on the sea bed of biocides with high toxicity, contained in the antifouling paints. In particular, innumerable animal and plant species sustain irreparable damage since the biocides easily enter into the food chain.

In addition, other particular damage is seen following the penetration of biocides and additives, which include toxic molecules and heavy metals, into the ground and within the water tables.

A further drawback of the known painting products lies in the heavy release of toxic and polluting substances in the production, application and removal of the painting products themselves. Such release is the cause of serious damage to the atmosphere, both in terms of greenhouse effect and for the diffusion of toxic substances. Relevant prior art background: US 2007/088099A1 which discloses aqueous dispersions comprising biodegradable polymers for the preparation of film-forming compositions and paints.

### Presentation of the invention

In this situation, the problem underlying the present invention is therefore that of remedying the drawbacks manifested by the abovementioned solutions of known type by providing a painting product and a process for making a painting product, which are provided with lower environmental impact.

A further object of the present invention is to provide a painting product and a process for making a painting product, which do not release pollutant substances into the atmosphere.

A further object of the present invention is to provide a painting product, which is atoxic.

A further object of the present invention is to provide a painting product, which is easily biodegradable or compostable.

A further object of the present invention is to provide a painting product and a process for making a painting product, which are simple and inexpensive to attain.

### Brief description of the drawings

The technical characteristics of the invention, according to the aforesaid objects, can be clearly seen from the contents of the below-reported claims and the advantages thereof will be more evident from the following detailed description, made with reference to the enclosed drawings, which represent a merely exemplifying and non-limiting embodiment of the invention, in which:
- figure 1 shows the results of a DSC (Differential Scanning Calorimetry) test carried out on three samples, respectively of pure PHA, of PHA with 10% by weight of rosin and of PHA with 10% by weight of soy oil;
- figure 2 shows four optical microscope enlargements of a sample obtained according to an embodiment of the method, object of the invention;
- figure 3 shows the results of a DLS (Dynamic Light Scattering) test which report the distribution of the particles within the sample pursuant to Figure 2;
- figure 4 shows an image obtained by means of scanning electron microscope of a section of a sample pursuant to Figure 2 that is dried and with glass fiber at its interior;
- figure 5 shows a graph with results of measurements of the contact angle of the water with respect to two samples obtained with a further embodiment of the method, object of the invention, and with respect to a fiberglass surface on which they are deposited and allowed to dry;
- figures 6a and 6b show two graphs with viscosity measurement results for one of the samples pursuant to Figure 5 that is still liquid, respectively with a fitting shear thinning range and with a plateau of the infinite-shear viscosity;
- figure 7 shows a graph with test results of biodegradability in marine environment for the samples pursuant to Figure 5 net of inorganic fillers and for control samples in pure cellulose.

### Detailed description of several preferred embodiments

The present painting product is advantageously usable in the construction field, for example as paint for exteriors for aesthetic purposes, advantageously lacking toxic effects for the environment when it is dispersed therein due to normal erosion; for internal hospital environments, days cares or food industries, as coverage for pavements of any type, so as to prevent the formation of moss, mold, fungi, plants, or other organic elements.

The present painting product is also advantageously usable in the field of the nautical and marine industry nautical as alternative to the protective coatings presently on the market (primers, paints, coatings, films, adhesive wraps) of boats, of hulls, of commercial ships and sports craft, of vessels, of structures and platforms, of pipes, of equipment and of any other manufactured item (floating or immersed in fresh or sea water), preferably for the purpose of slowing or eliminating the processes of corrosion and deposition of biological encrustations (in the jargon termed biofouling).

The present painting product is also advantageously usable in the field of the mechanical and automobile industry, for example as coating for vehicles.

The present painting product is also advantageously usable in the field of production of interior design, in particular for furniture, accessories and furnishing accessories whether made of wood, metal, resin or any other paintable material.

The present painting product is also advantageously usable in the field of production of home appliances or apparatuses for climate control such as radiators or heaters.

The present painting product is also advantageously usable in the cosmetics field, for example as nail polish.

The present painting product is also advantageously usable in the field of industry in general, in particular as atoxic paint for the protection and anticorrosion of structures, in particular metal structures, such as scaffolding, railings, conduits, chemical plants or other metallic elements exposed to the outside environment.

With the expression "painting product" it will be intended any one mixture of chemical products which, when applied in one or more layers on a support by means of a defined sequence of operations, forms a solid film provided with mechanical and chemical strength such to protect the support from the aggression of the physical and chemical agents present in the environment, and provided with characteristics such - with regard to the color, appearance, touch and uniformity - to change the aesthetic appearance of the painted support. For example, the painting product can be a paint, a varnish, a lacquer, an enamel, a base coat or a finish.

Advantageously, the painting product can be applied on a surface in different forms, for example with paintbrush, roller or spray. In particular, the painting product can be in liquid or gel form, depending on the composition, the temperature, the type or types of components employed which will be described hereinbelow.

Of course, the painting product can be not just in liquid form but also in the form of a film or sheet or plate material (i.e. already hardened). In addition, the painting product can also be only part of a formulation for a varnish or a paint.

In accordance with the invention the painting product comprising an emulsion between an aqueous dispersive phase and a dispersed organic phase, in which the dispersive phase comprises at least water and an emulsifier selected from among polyvinylalcohol, polyvinylalcohol copolymers, polyethyleneglycol, polyethyleneglycol copolymers and mixtures thereof; and the dispersed phase comprises at least one polyhydroxyalkanoate and at least one natural adhesive agent

Preferably, the painting product does not contain any type of volatile organic compound as solvent. Of course, it will be intended that a volatile organic compound can be present at most only in traces, i.e. in a percentage by weight lower than 1% of the painting product, preferably lower than 0.5% and still more preferably lower than 0.1%.

In particular, it was found that the emulsion of a polyhydroxyalkanoate and an emulsifier in aqueous phase of the above-reported type is capable of leading to a stable painting product without requiring the addition of solvents such as volatile organic compounds, and therefore it is not harmful for the environment and the operators.

In this manner, the painting product is based on biodegradable and/or compostable biopolymers and is therefore advantageously biodegradable and/or compostable itself.

Advantageously, the painting product is biodegradable according to the regulation EN 13432 and/or ASTM D6691. Of course, the biodegradability is to be considered net of the presence of inorganic additives (e.g. glass fibers or clay or stone materials).

In addition, it was surprisingly found that the painting product according to the invention is provided with antifouling properties.

More in detail, the polyhydroxyalkanoates (hereinbelow also abbreviated with PHA) are a class of biodegradable linear polyesters produced from various types of bacteria (such as for examples *Pseudomonas, Aeromonas, Alcaligenes, Cupriavidus, Bacillus, Rhodococcus, Rhizobium, Rhodospirillium, Azotobacter*)*.* Depending on the type of bacteria, the nutriment, the fermentation conditions, it is possible to obtain PHA with different chemical composition, molecular weight and mechanical, chemical and physical characteristics. In particular, the PHA are thermoplastic polymers with melting temperature comprised between 160 °C and 180 °C, with good water barrier properties and resistant to UV radiation. In addition, the PHA are poorly soluble in the conventional solvents (except those halogenated such as for example CH₂Cl₂ and CHCl₃).

In general, the process for producing PHA comprises a fermentation step, in which the bacteria employed in the fermenters use the PHA as energy storage and store them as granules within their cellular membrane. In addition, such production process comprises an extraction step, at the end of the fermentation step, in which the PHA are extracted from the bacteria with suitable solvents that break the cellular membranes and extract the polymer contained therein. Subsequently, the production process provides for a refining step, in which the PHA are purified and dried such that they can be used for the subsequent industrial passages.

Advantageously, the pHA can be homopolymer or copolymer, and as copolymer can be block, bipolymer or terpolymer.

More in detail, the general structure of a PHA is indicated in the formula (I) reported below:

*-O - CR*₁*H -* (*CH*₂)*n - CO -* (I)

in which R₁ is a hydrogen atom H or a linear, branched or cyclic alkyl functional group, composed of carbon and hydrogen atoms, preferably with carbon atoms in a number from 1 to 16, still more preferably from 1 to 3; and n is an integer from 1 to 6, preferably 1.

In the case of a copolymer of PHA, the formula (I) advantageously has along its structure portions with groups R₁ and/or different numbers n and/or different groups R₁ along the entire chain.

In accordance with the preferred embodiment of the invention, the polyhydroxyalkanoate is selected from: poly-3-hydroxybutyrate (PHB), poly-3-hydroxyvalerate (PHV), poly-3-hydroxyoctanoate (PHO), poly-3-hydroxyhexanoate (PHH), poly(3-hydroxybutyrate-co-3-hydroxyhexanoate) (PHBH), poly(3-hydroxybutyrate-co-4-hydroxybutyrate) (P(3HB-co-4HB)), poly(3-hydroxyoctanoate-co-3-hydroxyundecene-10-enoate) (PHOU), poly(3-hydroxybutyrate-co-3-hydroxyvalerate) (PHBV), poly(3-hydroxybutyrate-co-3-hydroxyvalerate25 co-4-hydroxyvalerate (PHBVV), and mixtures thereof.

Preferably, the pHA used is the poly-3-hydroxybutyrate (PHB or PH3B). With reference to the formula (I), the pHB possesses *n* = 1 and *R*₁ *= CH₃* with configuration of the chiral center R. In addition, the pHA advantageously has a molecular weight comprised between 20 and 1000 kDa, preferably between 100 and 500 kDa, still more preferably of about 240 kDa.

In accordance with the preferred embodiment of the invention, the emulsifier comprises polyvinylalcohol (hereinbelow also abbreviated with PVA). More in detail, the general structure of the PVA is indicated in the formula (II) reported below:

*-*[*CH*₂ *- CH*(*OH*)]*m -* [*CH*₂ *- CH*(*O - CO - CH*₃)]*p -* (II)

in which m and p are integers tied to the degree of hydrolysis of the PVA. In particular, the PVA is derived from the hydrolysis of the polyvinylacetate (which is obtained if m = 0 in formula (II)), therefore if the hydrolysis is complete and the PVA is pure then p = 0.

Advantageously, the size and the proportions of m and p define the properties of the PVA. In particular, the numbers m and p of PVA can vary in order to adapt the characteristics of the product to the specific application requirements.

More in detail, the PVA has a degree of hydrolysis greater than 50%, preferably greater than 75%, still more preferably greater than 90%.

In addition, the PVA advantageously has a molecular weight comprised between 10 and 1000 kDa, preferably between 50 and 500 kDa.

Advantageously, the PVA is soluble in water and is entirely biodegradable. Therefore, the PVA is advantageously provided with a high environmental compatibility. In this manner, the use of PVA allows obtaining a painting product lacking negative effects for the environment. In particular, the PVA can be derived from fossil fuels or from renewable sources, e.g. derived from vegetable oils.

Advantageously, the emulsifier is a polyvinylalcohol copolymer and a polyolefin, in particular polyethylene (PE). Preferably, the emulsifier is a block copolymer PVA-PE.

Advantageously, the emulsifier is present in a fraction comprised between 0.05 and 5 by weight with respect to the weight of the polyhydroxyalkanoate, preferably between 0.2 and 2 by weight.

Advantageously, in addition, the water is present in a fraction comprised between 5 and 100 by weight with respect to the weight of the polyhydroxyalkanoate, preferably between 2 and 30 by weight.

With the term "adhesive agent", it will be intended any one agent capable of further improving the adhesion of the painting product to a surface. Advantageously, the adhesive agent is selected based on the type of material to which the painting product must adhere.

In particular, the adhesive agent can be single component or bicomponent. In the case of a bicomponent adhesive agent, the latter is in particular a reactive mixture, in which the mixing of two or more components induces a chemical reaction that leads to the production of the adhesive agent.

As indicated above the adhesive agent is a natural adhesive agent, i.e. a product with adhesive properties that originated or derived from mixtures or compounds of vegetable or animal origin. Advantageously, the natural adhesive agent is selected from among: turpentine, colophony, rosin, terpene resins, natural rubber, natural carbohydrates, natural proteins, lignin, beeswax, natural vegetable oils, chemically modified vegetable oils, natural oils and fats of recovery from the food industry, lacquer, tar, and mixtures or derivatives thereof.

With the expression "natural carbohydrates" it will be intended carbohydrates of vegetable or animal origin, such as for example amides (including rice glue and flour glue), pectin, xanthan gum, guar gum, chitosan, cellulose and cellulose derivatives, destrin.

With the expression "natural proteins", it will be intended proteins of vegetable or animal origin, derived from for example gluten, zein, collagen and casein. Among these, casein is preferred.

Preferably, the natural adhesive agent is selected from among: turpentine, colophony, rosin, terpene resins, natural carbohydrates of vegetable origin, casein, natural vegetable oils, chemically modified vegetable oils, natural oils and fats of recovery from the food industry, lacquer, and mixtures or derivatives thereof.

Preferably, the natural adhesive agent is derived from conifers. In particular, the following are preferably: terpene resins and/or turpentine and/or colophony and/or the rosin and/or mixtures or derivatives thereof. Indeed, it was found that the latter natural adhesive agents produce the highest-performing results.

Also intended to be comprised with the expression "terpene resins" are of course all the resins of the same type that are not directly deriving from conifers, but from other plant species.

Of course, it is also possible to use a synthetic adhesive agent.

The natural adhesive agents are used since - while having a useful lifetime lower than the synthetic agents - their environmental impact is much lower.

Advantageously, the adhesive agent is present in a fraction comprised between 0.1 and 3 by weight with respect to the weight of the polyhydroxyalkanoate, preferably between 0.1 and 2 by weight, still more preferably between 0.5 and 1.5 by weight.

Advantageously, the painting product also comprises at least one additive, in particular in order to improve the resistance thereof and/or the capacity to prevent the development of organisms on the coating. Advantageously, tale additive is selected from among: particles or nanoparticles of metal oxides (preferably titanium oxide), metal particles or nanoparticles, calcium carbonate particles or nanoparticles, particles of lignin, glass fibers, carbon fibers, carbon nanotubes, graphene, fullerenes, fibers of vegetable origin (preferably residues of wood processing), kenaf, jute, biochar, sugarcane, sisal, hemp, flax, cereal hulls, clays or nanoclays (preferably kaolinite), montmorillonite, bentonite, halloysite, and mixtures thereof.

In order to modify the mechanical properties of the paint and advantageously improve the plasticity, the additive can also be a plasticizing agent. Preferably, the plasticizing agent is of natural origin or lacks toxic effects for the environment. For example, the plasticizing agent is selected from among citrates (triethyl citrate and/or acetyl tributyl citrate), glycerin, polyethylene oxide (PEO), oils of vegetable origin, epoxy vegetable oils (linoleic oil, soybean oil) and mixtures thereof.

In order to improve the seal, the painting product also comprises advantageously at least one crosslinking agent, which is preferably selected from among: glutaraldehyde-bis-(sodium hydrogen sulfite), citric acid, aluminum chloride, boric acid, sodium tetraborate decahydrate, glyoxal, glyoxal resin, sodium aluminate, zinc ammonium carbonate, p-toluene sulfonic acid, glyoxylic acid, sulfuric acid, calcium hydroxide, phosphonic acid and mixtures thereof.

Advantageously, the crosslinking agent is present in a fraction comprised between 0.0001 and 0.2 by weight with respect to the weight of the polyhydroxyalkanoate, preferably between 0.001 and 0.2.

Optionally, the painting product can also comprise at least one preservative for slowing the deterioration, in particular before application.

Advantageously, the painting product, object of the invention, can be totally or part of paint formulations and/or protective coatings in order to protect metallic, plastic or wood surfaces, made of composite, stone or wall material, even if they are already covered by other paint layers.

For example, the painting product, object of the invention, can be only one base for varnishes, paints or enamels or constitute the entire paint/varnish itself. Therefore, the painting product can also be an intermediate product of the paid production chain.

In particular, the coating obtained by the application of the aforesaid painting product on a surface has semi-permanent character, since the PVA/PHA base tends to be naturally degraded when exposed to the natural environment.

At the end of the useful lifetime, the coating can advantageously be removed and dispersed into the environment without any risk for the same, having in the meantime protected the underlying surface from biological encrustations, from the deposit of moss, lichens, molds and other living organisms, as well as from corrosion and abrasion.

In addition, the painting product is advantageously innocuous for the environment even during the lifetime of the coating and does not cause significant alteration or contaminations for the marine, aquatic or land environment within which it is used.

Also forming the object of the present invention is a process for making a painting product, advantageously in order to make the above-described painting product.

The process for making a painting product is advantageously intended to be employed in the chemical industry for producing paints, varnishes, lacquers, enamels, base coats, finishes for the treatment of surfaces.

The process according to the invention comprises a first dissolution step, in which at least one polyhydroxyalkanoate is dissolved in an organic solvent in order to obtain a binding mixture.

In particular, the polyhydroxyalkanoate is of the type described above and is advantageously selected from among: poly-3-hydroxybutyrate (PHB), poly-3-hydroxyvalerate (PHV), poly-3-hydroxyoctanoate (PHO), poly-3-hydroxyhexanoate (PHH), poly(3-hydroxybutyrate-co-3-hydroxyhexanoate) (PHBH), poly(3-hydroxybutyrate-co-4-hydroxybutyrate) (P(3HB-co-4HB)), poly(3-hydroxyoctanoate-co-3-hydroxyundecene-10-enoate) (PHOU), poly(3-hydroxybutyrate-co-3-hydroxyvalerate) (PHBV), poly(3-hydroxybutyrate-co-3-hydroxyvalerate25 co-4-hydroxyvalerate (PHBVV), and mixtures thereof.

In accordance with the preferred embodiment of the invention, the organic solvent is a halogenated organic solvent, preferably chloroform.

Advantageously, in the first dissolution step, the polyhydroxyalkanoate is dissolved in a quantity comprised between 2% and 10% by weight with respect to the sum of polyhydroxyalkanoate and organic solvent, preferably between 4% and 7% and still more preferably about 5.6%.

Advantageously, the first dissolution step is executed at a temperature comprised between 60 and 120 °C, preferably between 75 and 100 °C and still more preferably of about 90°C.

The process according to the invention also comprises a second dissolution step, in which at least one emulsifier is dissolved in water in order to obtain an emulsifier solution. Said emulsifier is selected from among: polyvinylalcohol, polyvinylalcohol copolymers, polyethyleneglycol, polyethyleneglycol copolymers and mixtures thereof.

Advantageously, in the second dissolution step the emulsifier is dissolved in a quantity comprised between 0.5% and 10% by weight with respect to the emulsifier solution, preferably between 1% and 7%, still more preferably about 4%.

In particular, the emulsifier is of the type described above and therefore will not be described more in detail hereinbelow.

In accordance with the invention, the process comprises an emulsion step, in which the binding mixture and the emulsifier solution are emulsified with each other in order to obtain an emulsified mixture.

Advantageously, in the emulsion step, the binding mixture and the emulsifier solution are in a volume ratio comprised between 0.2 and 9.4, preferably between 0.5 and 5.0 and still more preferably 1.4.

More in detail, the emulsion step is protracted for a time comprised between 1 minute and 30 minutes, preferably comprised between 5 and 15 minutes and still more preferably of about 10 minutes. In particular, the joining of the binding mixture to the emulsifier solution occurs by means of addition via dripping of the first in the second, during the mixing. Of course, the joining can be executed even completely before the mixing.

The process also comprises a step for removing, advantageously by means of evaporation, at least part of the organic solvent from the emulsified mixture in order to obtain a painting product.

In accordance with the preferred embodiment of the process, in the removal step the emulsified mixture is inserted in a rotary evaporator for the elimination of the organic solvent and heated to a temperature comprised between 25 and 60 °C, preferably between 30 and 50 °C and still more preferably about 40 °C.

In the aforesaid removal step, the evaporator is then advantageously actuated in order to maintain the solution under stirring, and a vacuum is applied therein at a pressure comprised between 100 and l mbar, preferably between 50 and 1 mbar and still more preferably about 8 mbar. In particular, the evaporation in the removal step is protracted for a time greater than 20 minutes, preferably lower than 120 minutes and still more preferably of about 60 minutes.

Of course, the removal of the organic solvent, in particular its evaporation, can be obtained by means of any other known mode.

Preferably, in the removal step, the organic solvent is entirely removed, such that the painting product obtained is free of organic solvents, in particular of volatile organic compounds. Of course, it will be intended that a residue of organic solvent can be present at most only in traces, i.e. in a percentage by weight lower than 1% of the painting product, preferably lower than 0.5% and still more preferably lower than 0.1%.

In this manner, the process in order to attain the painting product has minimal impact on the environment, since the evaporated organic solvent can be recovered and reused without being dispersed environment.

During the removal step, also part of the water contained in the emulsified mixture can evaporate.

The process according to the invention comprises a step of adding a natural adhesive agent.

In particular, as indicated above, the natural adhesive agent is advantageously selected from among: turpentine, colophony, rosin, terpene resins, natural rubber, natural carbohydrates, natural proteins, lignin, beeswax, natural vegetable oils, chemically modified vegetable oils, natural oils and fats of recovery from the food industry, lacquer, tar, and mixtures or derivatives thereof.

Preferably, the natural adhesive agent is selected from among: turpentine, colophony, rosin, terpene resins, natural carbohydrates of vegetable origin, casein, natural vegetable oils, chemically modified vegetable oils, natural oils and fats of recovery from the food industry, lacquer, and mixtures or derivatives thereof.

Still more preferably, the natural adhesive agent is derived from conifers. In particular, the following are preferable: terpene resins and/or turpentine and/or colophony and/or rosin and/or mixtures or derivatives thereof. Indeed, it was found that the latter natural adhesive agents produced the highest-performing results.

More in detail, the adhesive agent is added in a quantity comprised between 10% and 200% by weight with respect to the polyhydroxyalkanoate, preferably between 50% and 150%, still more preferably about 100%.

The addition of the adhesive agent is executed simultaneously with the first dissolution step and in this case simultaneously or after the mixing of polyhydroxyalkanoate and organic solvent.

In accordance with a first embodiment variant, the first dissolution step and the addition step provide for mixing the organic solvent and the polyhydroxyalkanoate in order to obtain a solution of polyhydroxyalkanoate and subsequently mixing the solution of polyhydroxyalkanoate with the adhesive agent in order to obtain the binding mixture. In the event in which the adhesive agent is not added, the binding mixture is then advantageously the same solution of polyhydroxyalkanoate.

In accordance with a second embodiment variant, the first dissolution step and the addition step provide for mixing together the organic solvent, the polyhydroxyalkanoate and the adhesive agent in order to directly obtain the binding mixture.

Advantageously, the addition step can also be executed before, during or after the emulsion step.

Advantageously, in addition, the addition step can also be executed before, during or after the removal step.

Of course, in any step of the process also other additives can be added, for example of the type mentioned above, such as fillers, antifouling elements and/or preservatives.

For example, inorganic fillers can be optionally added to the painting product in percentages comprised between 0 and 100% with respect to the weight of the solid content of the painting product, preferably between 0 and 80%, still more preferably between 15 and 35%.

Advantageously, the process also comprises a step of at least partial crosslinking of the painting product in which a crosslinking agent is added to the painting product. In particular, the crosslinking agent is of the type described above and is for example selected from among: glutaraldehyde-bis-(sodium hydrogen sulfite), citric acid, aluminum chloride, boric acid, sodium tetraborate decahydrate, glyoxal, glyoxal resin, sodium aluminate, zinc ammonium carbonate, p-toluene sulfonic acid, glyoxylic acid, sulfuric acid, calcium hydroxide, phosphonic acid and mixtures thereof.

More in detail, the crosslinking agent is added in a percentage comprised between 0.1 and 10% by weight with respect to the painting product, preferably between 0.5% and 5%, still more preferably between 0.4 and 2 %.

Advantageously, the process also comprises a step of adjusting the pH, in which an acid or a base to the painting product. In particular, the acidic or basic environment is adapted if necessary on the basis of the crosslinking agent to be used in the crosslinking step.

In the event in which the pH is adjusted by means of the addition of an acid, in the adjustment step the pH is advantageously brought to a comprised between 2.5 and 5.5, preferably between 2.5 and 4.0 and still more preferably about 3.0.

In the event in which the pH is adjusted by means of the addition of a base, for example if sodium tetraborate decahydrate is used as crosslinking agent, in the adjustment step the pH is advantageously brought to a value comprised between 7.5 and 10, preferably between 7.5 and 9.0 and still more preferably about 8.0.

Hereinbelow, a first embodiment of a process for making a painting product is described for comparison purposes.

In the first dissolution step, 1 g of PHB in pellet and 20 ml of chloroform were introduced within a glass flask. In particular, the flask was provided with a bubble condenser so as to prevent the evaporation of the chloroform. The mixture was then placed under stirring, progressively brought to the temperature of 90 °C and left under stirring with magnetic anchor for an hour in order to dissolve the pHB and obtain the binding mixture.

In the second dissolution step, 1 g of PVA (*Mowiol*^{®} 8-88) and 100 ml of distilled water were introduced in a glass flask. In particular, the flask was provided with a bubble condenser so as to prevent the evaporation of the water. The mixture was then placed under stirring, progressively brought to the temperature of 95 °C and left under stirring with magnetic anchor for an hour in order to dissolve the PVA and obtain the emulsifier solution. The emulsifier solution was also filtered in order to remove possible residues of PVA that did not dissolve.

In the emulsion step, the binding mixture was slowly dripped into the emulsifier solution placed under magnetic stirring at 800 rpm. An emulsified mixture was thus obtained.

In the removal step, the emulsified mixture was placed within a flask and it was brought to a temperature comprised between 80 and 90 °C in order to evaporate the chloroform, which was recovered and reused, preventing the introduction thereof into the atmosphere.

The addition step was then executed after the removal step and in particular rosin was added in a quantity of 0.1 g and glass fibers in quantity of 0.5 g in order to obtain the painting product. The painting product is then brought to pH 3 with a quantity of 0.1 g of citric acid added.

**Table 1 - Quantity of glass fiber, rosin and citric acid used in embodiments 2-7 with respect to the quantity of PHB**

| | Quantity of glass fiber (%) | Quantity of rosin (%) | Quantity of citric acid (%) |
|---|---|---|---|
| Embodiment 2 | 50 | 50 | 10 |
| Embodiment 3 | 100 | 100 | 10 |
| Embodiment 4 | 75 | 25 | 10 |
| Embodiment 5 | 50 | 50 | 20 |
| Embodiment 6 | 100 | 100 | 20 |
| Embodiment 7 | 75 | 25 | 20 |

Table 1 reports further embodiments for comparison purposes obtained with the same process of the first embodiment, but with different quantities of glass fiber, rosin and citric acid. All the data are expressed in percentage with respect to the quantity of PHB of the above-reported example.

Hereinbelow, an eighth embodiment of a process for making a painting product according to the invention is described.

During the first dissolution step and the addition step, performed simultaneously, the following were introduced in a reflux flask: 2 g of PHVB, 1 g of rosin ester and 20 ml of chloroform. The solution was mixed for 2 hours and cooled at ambient temperature in order to obtain the binding mixture.

In the second dissolution step, an emulsifier solution was prepared comprising 2% PVA with degree of hydrolysis of 98% and molecular weight greater than 100 kDa. In the emulsifier solution, 1 g of glass fiber and 1 g of sodium bentonite were dispersed.

In the emulsion step, the binding mixture was inserted by means of slow dripping in the emulsifier solution placed under strong stirring, forming a stable emulsified mixture stabile.

Subsequently, the separation step was executed, in which the emulsified mixture was inserted in a flask connected to a separation system named "Dean-Stark". The flask was placed in an oil bath at 70 °C under mechanical stirring. The system then extracted the chloroform from the emulsified mixture in about 5 hours.

The painting product is thus obtained, to which boric acid was added as crosslinking agent and brought to 8.0 pH with addition of 0.1 M NaOH.

Hereinbelow, a ninth embodiment of a process for making a painting product according to the invention is described.

During the first dissolution step and the addition step, carried out simultaneously, the following were introduced in a reflux flask: 2 g of PHVB, 1 g of rosin ester and 20 ml of chloroform. The solution was mixed for 2 hours and cooled at ambient temperature in order to obtain the binding mixture.

In the second dissolution step, an emulsifier solution was prepared comprising 2% PVA with degree of hydrolysis of 98% and molecular weight greater than 100 kDa. In the emulsifier solution, 1 g of glass fiber were also dispersed.

In the emulsion step, the binding mixture was inserted by means of slow dripping in the emulsifier solution placed under strong stirring, forming a stable emulsified mixture.

Subsequently, the separation step was executed, in which the emulsified mixture was inserted in a flask connected to a separation system named "Dean-Stark". The flask was placed in an oil bath at 70 °C under magnetic stirring. The system then extracted the chloroform from the emulsified mixture in about 5 hours.

The painting product to which glutaraldehyde-bis-(sodium hydrogen sulfite) was added as crosslinking agent was thus obtained and brought to pH 3.0 with addition of citric acid.

It was observed that the samples thus obtained according to the above-described embodiments are stable at ambient temperature and depositable with a brush or a roller. The deposited layer dried completely after 1 day in ambient temperature and pressure conditions.

Such samples after drying were subjected to an abrasion resistance test, in accordance with the procedure ISO 15184, termed in the jargon "pencil test". In order to carry out such test, an instrument *TQC SHEEN Pencil Hardness test 750 g* (series number 1068) was used with calibration certificate number VF2378-1068. A hardness threshold HB was considered as acceptable.

From such test, it resulted that all the samples obtained an abrasion resistance with a hardness 3H. Otherwise, a test performed on a paint obtained as the first embodiment but without adhesive agent did not pass a test with hardness 3B.

From such test, it was then detected that the addition of adhesive agent considerably increases the abrasion resistance of the painting product.

In order to better observe the properties derived from the addition of the natural adhesive agent, a DSC (Differential Scanning Calorimetry) test was also performed on three different samples, including a first sample of pure PHA, a second sample of PHA with the addition of 10% by weight of rosin, a third sample of PHA with the addition of 10% by weight of soy oil.

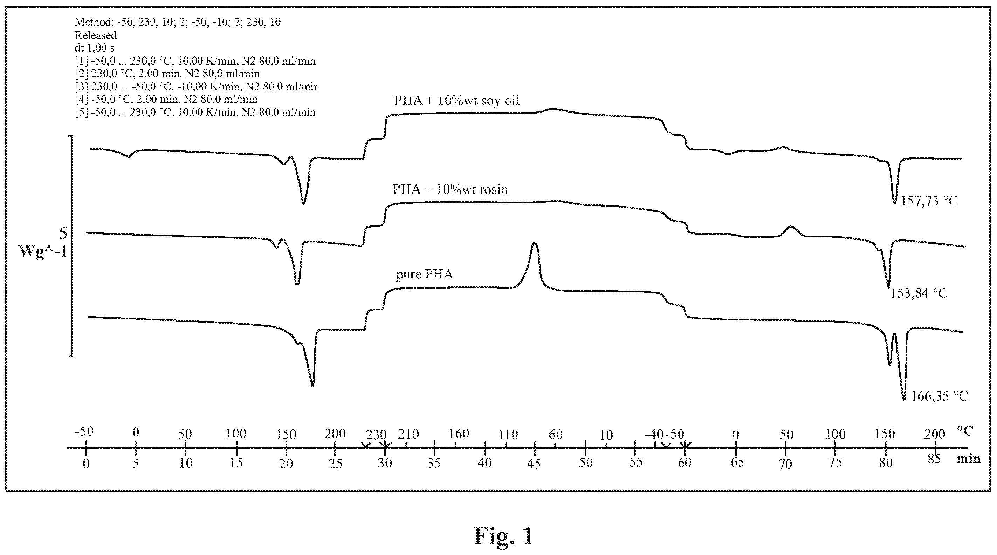

The results of the test are illustrated in figure 1, from which it was detected that the natural adhesive agent acts as plasticizer, decreasing the melting temperature from 166 °C (as is observed by the peak of the pure pHA) to 153-160 °C (as is observed by the peak of the second sample). In addition, from such information, and from the observation of the halving of the height of the peak of the second sample, it can be inferred that the addition of rosin decreases the crystallinity of the sample. Consequently, one obtains a less fragile material. The plasticizing action is confirmed from the comparison with the third sample (in which however the soy oil does not act as adhesive agent but only has plasticizing agent).

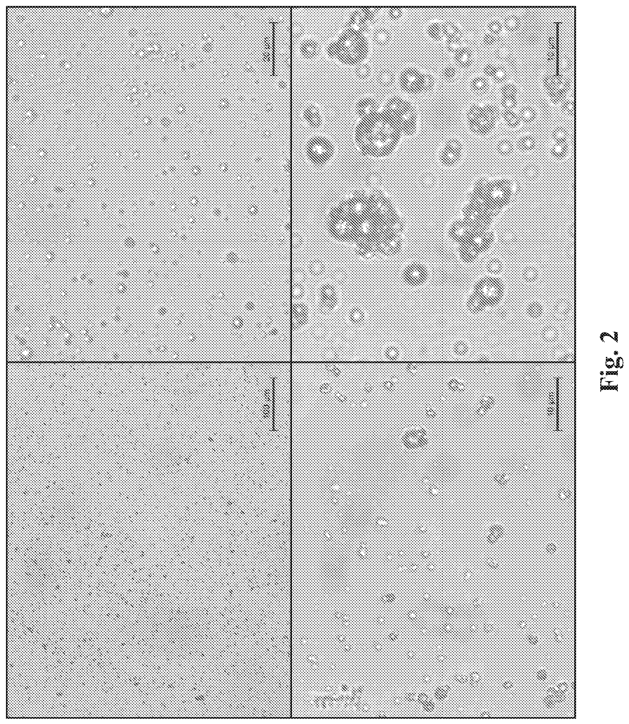

An optical microscope investigation was also performed of a sample of liquid painting product obtained according to the eighth embodiment (in which the glass fiber and the bentonite were not added in order to allow better viewing of the dispersed particles). As is visible in figure 2, which shows four different optical microscope enlargements of the sample, the latter contains particles of substantially equal size, taken separately or in small agglomerates in the liquid phase, but in both cases uniformly distributed in the painting product sample. The uniformity of the painting product can be interpreted as the quality index of the same.

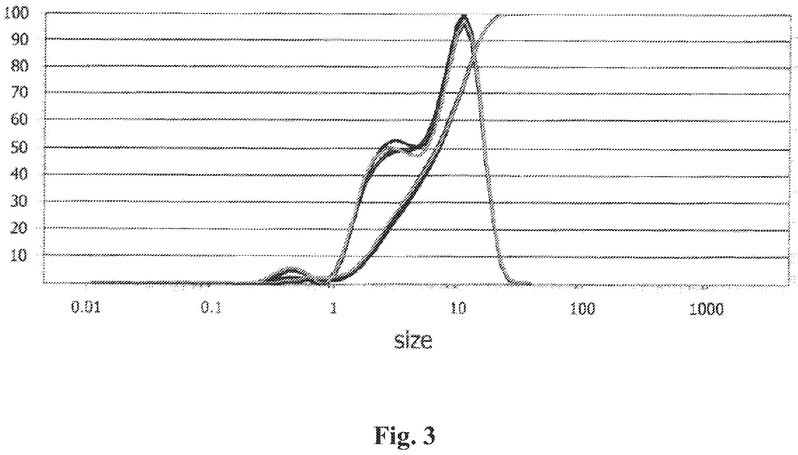

The same sample was also subjected to a DLS (Dynamic Light Scattering) test, from which it was possible to examine the distribution of the particles within the painting product. The results, illustrated in figure 3, showed that the particles mainly have a distribution with size peak at about 2 µm, possibly present in aggregates of about 10 µm. In general, a paint of known type comprises particles lower than 100 µm, therefore such analysis confirms the quality of the painting product.

The results relative to the uniformity of the latter sample of painting product were compared with those deriving from a sample obtained according to the first embodiment (without the addition of glass fiber) and it was observed that the latter is much less uniform than the preceding. It was therefore surprisingly found that the addition of natural adhesive agent during the same first step of adding the PHA in the organic solvent considerably improves the dispersion of the particles, consequently improving the quality of the painting product.

Further tests were also performed in order to verify the quality of the painting product after drying. In particular, a section of a sample obtained according to the eighth embodiment without bentonite was analyzed with scanning electron microscope by means of a FEG (SEM-FEG) *Gemini 500 Zeiss* microscope.

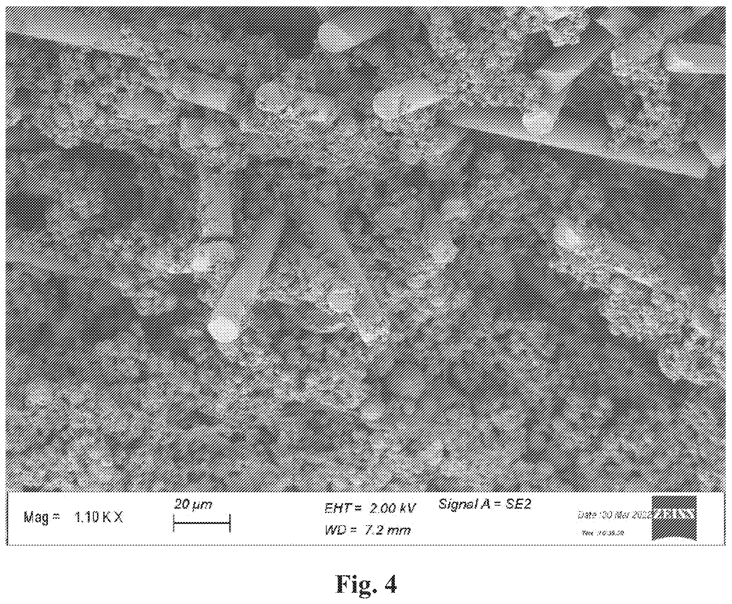

From the result, visible in figure 4, a good compactness of the painting product was observed together with adhesion between matrix and filler (the glass fiber added as inorganic additive). Such characteristics are inferable from the fact that there were no voids within the structure of the painting product and that the matrix adheres perfectly to the filler. The addition of the natural adhesive agent is therefore useful for rendering the painting product adhesive, even to chemically different surfaces.

Further tests were also performed for verifying the contact angle, which indicates the wettability of the painting product once dried, i.e. the capacity of interacting or not interacting with a liquid, in particular water. Such test was performed on two samples ("Sample A" and "Sample B") obtained according to the ninth embodiment, extended on a fiberglass surface and dried and the result was compared with that relative to the same fiberglass support.

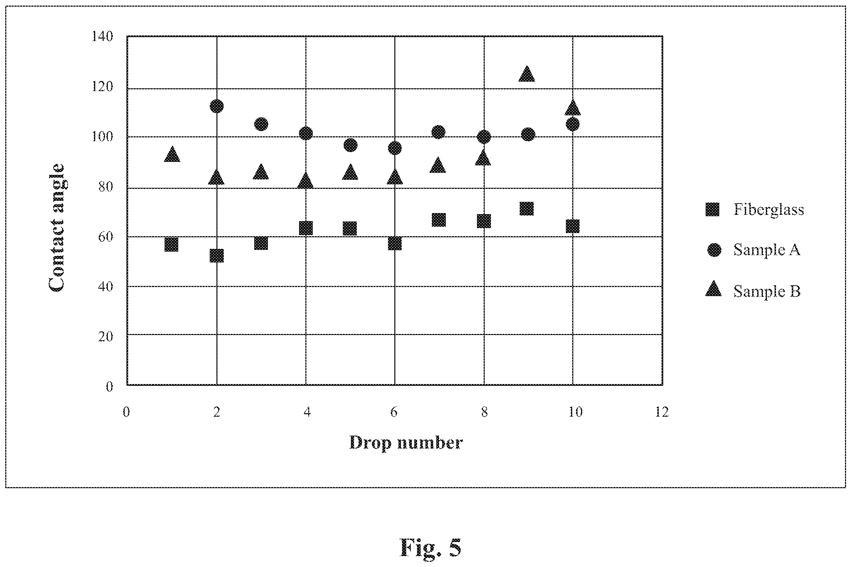

In particular, the test was executed by means of a goniometer for contact angle *Fibro System Pocket Goniometer PG-X* and the results are illustrated in figure 5.

It was observed that the samples show a very high contact angle, greater than that of the fiberglass and most of the polymers commonly used for painting products.

Further tests were also carried out for observing the rheological behavior, i.e. the viscosity, of the paint, executed on a sample obtained according to the ninth embodiment by means of a rheometer *Anton Paar MCR92* with concentric cylinder geometry.

In addition, the fitting shear thinning range and plateau value of the infinite-shear viscosity were determined. In particular, the pseudoplastic behavior of the shear thinning is typical, as well as desired, in painting products.

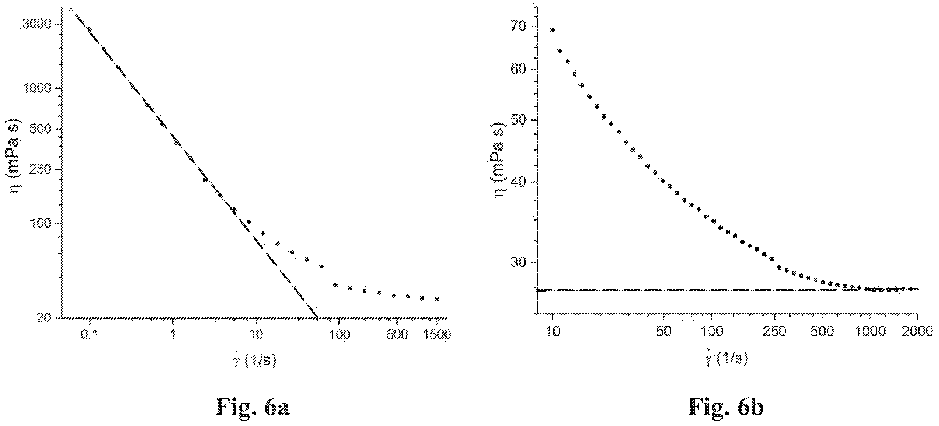

From the results, illustrated in figures 6a and 6b (graphs in logarithmic scale), it was observed that the slope of the fitting line of the shear thinning range has an optimal correspondence with the graph of the viscosity. Consequently, it can be inferred that the distribution of the molecular weights of the painting product does not change with the variation of the force. In addition, from the tests it resulted that the viscosity at infinite cutting speed is about 27.2 ± 0.1 *mPa·s.* The viscosimeter analyses have demonstrated that with the addition of natural adhesive agent, a painting product was obtained with viscosity characteristics suitable for a paint.

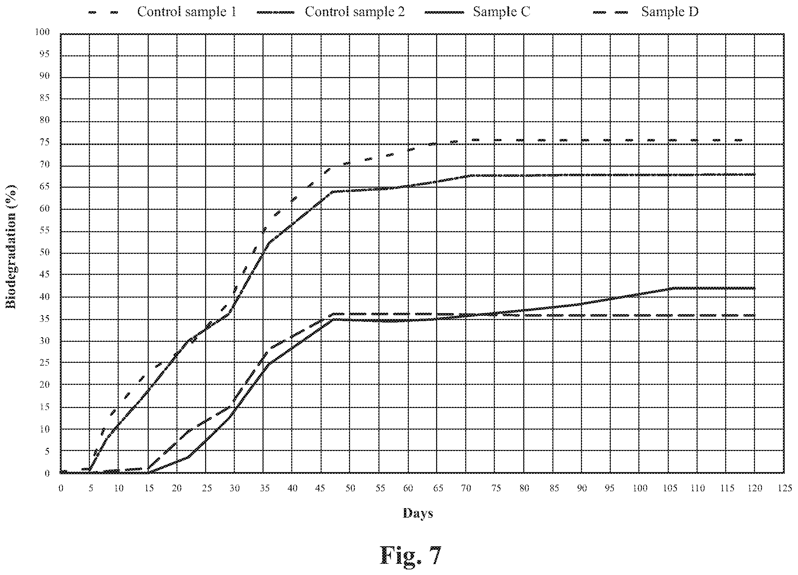

In addition, a biodegradability test was performed according to the norm ASTM D6691 in marine environment on two samples ("Sample C" and "Sample D") obtained according to the ninth embodiment without the addition of glass fiber and the results were compared with two control samples in pure cellulose. As illustrated in figure 7, the test has demonstrated that the samples sustained a considerable biodegradation in the first three months. At the same time, the samples showed a degradation that was not excessively fast (for example with respect to the control sample in cellulose) and therefore the painting product at the same time has sufficient resistance such that its application on the surface to be protected does not have to be repeated with an overly high frequency.

In addition, the obtained samples were analyzed in order to detect the presence of chloroform residues. Such analyses confirmed that the maximum residue of chloroform in the samples attained with the painting product is 0.04% w/w, hence fully compatible with the regulation that sets the maximum at 0.1%.

The invention thus conceived therefore attains the pre-established objects.

## Claims

1. Process for making a painting product, **characterized in that** it comprises the following steps:
- a first dissolution step, in which at least one polyhydroxyalkanoate is dissolved in at least one organic solvent in order to obtain a binding mixture;
- a step of adding a natural adhesive agent, which is executed simultaneously with said first dissolution step;
- a second dissolution step, in which at least one emulsifier is dissolved in water in order to obtain an emulsifier solution; said emulsifier being selected from among: polyvinylalcohol, polyvinylalcohol copolymers, polyethyleneglycol, polyethyleneglycol copolymers and mixtures thereof;
- an emulsion step, in which said binding mixture and said emulsifier solution are emulsified with each other in order to obtain an emulsified mixture;
- a step of removing at least part of said organic solvent from said emulsified mixture in order to obtain a painting product.

2. Process according to claim 1, **characterized in that** said organic solvent is a halogenated organic solvent, preferably chloroform.

3. Process according to claim 1 or 2, **characterized in that** in said first dissolution step, said polyhydroxyalkanoate is dissolved in a quantity comprised between 2% and 10% by weight with respect to the sum of polyhydroxyalkanoate and organic solvent.

4. Process according to any one of the preceding claims, **characterized in that** in said addition step, said natural adhesive agent is added in a quantity comprised between 10% and 200% by weight with respect to the polyhydroxyalkanoate.

5. Process according to any one of the preceding claims, **characterized in that** in said second dissolution step, said emulsifier is dissolved in a quantity comprised between 0.5% and 10% by weight with respect to the emulsifier solution.

6. Process according to any one of the preceding claims, **characterized in that** in said emulsion step, said binding mixture and said emulsifier solution are in a volume ratio comprised between 0.2 and 9.4.

7. Process according to any one of the preceding claims, **characterized in that** it also comprises a step of at least partial crosslinking of said painting product in which a crosslinking agent is added to said painting product, such crosslinking agent selected from among: glutaraldehyde-bis-(sodium hydrogen sulfite), citric acid, aluminum chloride, boric acid, sodium tetraborate decahydrate, glyoxal, glyoxal resin, sodium aluminate, zinc ammonium carbonate, p-toluene sulfonic acid, glyoxylic acid, sulfuric acid, calcium hydroxide, phosphonic acid and mixtures thereof.

8. Process according to any one of the preceding claims, **characterized in that** said natural adhesive agent is selected from among: turpentine, colophony, rosin, terpene resins, natural rubber, natural carbohydrates, natural proteins, lignin, beeswax, natural vegetable oils, chemically modified vegetable oils, natural oils and fats of recovery from the food industry, lacquer, tar, and mixtures or derivatives thereof.

9. Process according to claim 8, **characterized in that** said natural adhesive agent is selected from among turpentine, colophony, rosin, terpene resins, and mixtures or derivatives thereof.

10. Process according to claim 8 or 9, **characterized in that** said natural adhesive agent is derived from conifers.

11. Painting product comprising an emulsion between an aqueous dispersive phase and a dispersed organic phase, **characterized in that**:
- said dispersing phase comprises at least water and an emulsifier selected from among: polyvinylalcohol, polyvinylalcohol copolymers, polyethyleneglycol, polyethyleneglycol copolymers and mixtures thereof; and
- said dispersed phase comprises at least one polyhydroxyalkanoate and at least one natural adhesive agent.

12. Painting product according to claim 11, **characterized in that** said polyhydroxyalkanoate is selected from among: poly-3-hydroxybutyrate (PHB), poly-3-hydroxyvalerate (PHV), poly-3-hydroxyoctanoate (PHO), poly-3-hydroxyhexanoate (PHH), poly(3-hydroxybutyrate-co-3-hydroxyhexanoate) (PHBH), poly(3-hydroxybutyrate-co-4-hydroxybutyrate) (P(3HB-co-4HB)), poly(3-hydroxyoctanoate-co-3-hydroxyundecene-10-enoate) (PHOU), poly(3-hydroxybutyrate-co-3-hydroxyvalerate) (PHBV), poly(3-hydroxybutyrate-co-3-hydroxyvalerate25 co-4-hydroxyvalerate (PHBVV), and mixtures thereof.

13. Painting product according to claim 11 or 12, **characterized in that** said natural adhesive agent is selected from among: turpentine, colophony, rosin, terpene resins, natural rubber, natural carbohydrates, natural proteins, lignin, beeswax, natural vegetable oils, chemically modified vegetable oils, natural oils and fats of recovery from the food industry, lacquer, tar, and mixtures or derivatives thereof.

14. Painting product according to claim 13, **characterized in that** said natural adhesive agent is selected from among turpentine, colophony, rosin, terpene resins, and mixtures or derivatives thereof.

15. Painting product according to claim 13 or 14, **characterized in that** said natural adhesive agent is derived from conifers.

## Patentansprüche

1. Verfahren zur Herstellung eines Lackierprodukts, **dadurch gekennzeichnet, dass** es die folgenden Schritte umfasst:
- einen ersten Schritt der Auflösung, bei dem mindestens ein Polyhydroxyalkanoat in mindestens einem organischen Lösungsmittel aufgelöst wird, um ein Bindemittelgemisch zu erhalten;
- einen Schritt der Zugabe eines natürlichen Klebemittels, der gleichzeitig mit dem genannten ersten Schritt der Auflösung ausgeführt wird;
- einen zweiten Schritt der Auflösung, bei dem mindestens ein Emulgator in Wasser aufgelöst wird, um eine emulgierende Lösung zu erhalten; wobei der genannte Emulgator unter folgenden gewählt wird: Polyvinylalkohol, Polyvinylalkohol-Copolymeren, Polyethylenglykol, Polyethylenglykol-Copolymeren und deren Mischungen;
- einen Schritt der Emulsion, bei dem die genannte Bindemittelmischung und die genannte Emulgatorlösung miteinander emulgiert werden, um eine emulgierte Mischung zu erhalten;
- einen Schritt des Entfernens mindestens eines Teils des genannten organischen Lösungsmittels aus der genannten emulgierten Mischung, um ein Lackierprodukt zu erhalten.

2. Verfahren nach Anspruch 1, **dadurch gekennzeichnet, dass** das genannte organische Lösungsmittel ein halogeniertes organisches Lösungsmittel ist, vorzugsweise Chloroform.

3. Verfahren nach Anspruch 1 oder 2, **dadurch gekennzeichnet, dass** bei dem genannten ersten Auflösungsschritt das genannte Polyhydroxyalkanoat in einer Menge zwischen 2 Gew.-% und 10 Gew.-% der Summe aus Polyhydroxyalkanoat und organischem Lösungsmittel gelöst wird.

4. Verfahren nach einem beliebigen der vorangegangenen Ansprüche, **dadurch gekennzeichnet, dass** bei dem genannten Zugabeschritt das genannte natürliche Klebemittel in einer Menge von 10 Gew.-% bis 200 Gew.-%, bezogen auf das Polyhydroxyalkanoat, zugesetzt wird.

5. Verfahren nach einem beliebigen der vorangegangenen Ansprüche, **dadurch gekennzeichnet, dass** bei dem genannten zweiten Auflösungsschritt der genannte Emulgator in einer Menge zwischen 0,5 Gew.-% und 10 Gew.-% im Verhältnis zur Emulgierlösung aufgelöst wird.

6. Verfahren nach einem beliebigen der vorangegangenen Ansprüche, **dadurch gekennzeichnet, dass** bei dem genannten Emulgierschrittt das genannte Bindemittelgemisch und die genannte Emulgierlösung in einem Volumenverhältnis zwischen 0,2 und 9,4 vorliegen.

7. Verfahren nach einem beliebigen der vorangegangenen Ansprüche, **dadurch gekennzeichnet, dass** es außerdem einen Schritt der mindestens teilweisen Vernetzung des genannten Lackierprodukts umfasst, bei dem dem genannten Lackierprodukt ein Vernetzungsmittel zugesetzt wird, das unter folgenden gewählt wird: Glutaraldehyd-bis-(Natriumhydrogensulfit), Zitronensäure, Aluminiumchlorid, Borsäure, Natriumtetraborat-Decahydrat, Glyoxal, Glyoxalharz, Natriumaluminat, Zinkammoniumcarbonat, p-Toluolsulfonsäure, Glyoxylsäure, Schwefelsäure, Calciumhydroxid, Phosphonsäure und deren Mischungen.

8. Verfahren nach einem beliebigen der vorangegangenen Ansprüche, **dadurch gekennzeichnet, dass** das genannte natürliche Klebemittel unter folgenden gewählt wird: Terpentin, Kolophonium, Harzester, Terpenharzen, natürlichem Kautschuk, natürlichen Kohlenhydraten, natürlichen Proteinen, Lignin, Bienenwachs, natürlichen pflanzlichen Ölen, chemisch modifizierten pflanzlichen Ölen, natürlichen Ölen und Fetten, die aus der Lebensmittelindustrie gewonnen werden, Schellack, Pech und deren Mischungen oder Derivaten.

9. Verfahren nach Anspruch 8, **dadurch gekennzeichnet, dass** das genannte natürliche Klebemittel unter Terpentin, Kolophonium, Harzester, Terpenharzen und deren Mischungen und Derivaten gewählt wird.

10. Verfahren nach Anspruch 8 oder 9, **dadurch gekennzeichnet, dass** das genannte natürliche Klebemittel aus Koniferen gewonnen wird.

11. Lackierprodukt, umfassend eine Emulsion aus einer wässrigen dispergierenden Phase und einer organischen dispersen Phase, **dadurch gekennzeichnet, dass**
- die genannte dispergierende Phase mindestens Wasser und einen Emulgator umfasst, die unter folgenden gewählt werden: Polyvinylalkohol, Polyvinylalkohol-Copolymeren, Polyethylenglykol, Polyethylenglykol-Copolymeren und deren Mischungen; und
- die genannte disperse Phase mindestens ein Polyhydroxyalkanoat und mindestens ein natürliches Klebemittel umfasst.

12. Lackierprodukt nach Anspruch 11, **dadurch gekennzeichnet, dass** das genannte Polyhydroxyalkanoat unter folgenden gewählt wird: Poly-3-hydroxybutyrat (PHB), Poly-3-hydroxyvalerat (PHV), Poly-3-hydroxyoctanoat (PHO), Poly-3-hydroxyhexanoat (PHH), Poly(3-hydroxybutyrat-co-3-Hydroxyhexanoat) (PHBH), Poly(3-hydroxybutyrat-co-4-Hydroxybutyrat) Poly(3HB-co-4HB), Poly(3-hydroxyoctanoat-co-3-hydroxyundecen-10-enoat) (PHOU), Polyhydroxybutyrat-co-Hydroxyvalerat) (PHBV), Poly(3-hydroxybutyrat-co-3-hydroxyvalerat)25 co-4-hydroxyvalerat (PHBV) und deren Mischungen.

13. Lackierprodukt nach Anspruch 11 oder 12, **dadurch gekennzeichnet, dass** das genannte natürliche Klebemittel unter folgenden gewählt wurde: Terpentin, Kolophonium, Harzester, Terpenharzen, natürlichem Kautschuk, natürlichen Kohlenhydraten, natürlichen Proteinen, Lignin, Bienenwachs, natürlichen pflanzlichen Ölen, chemisch modifizierten pflanzlichen Ölen, natürlichen Ölen und Fetten, die aus der Lebensmittelindustrie gewonnen werden, Schellack, Pech und deren Mischungen oder Derivaten.

14. Lackierprodukt nach Anspruch 13, **dadurch gekennzeichnet, dass** das genannte natürliche Klebemittel unter Terpentin, Kolophonium, Harzester, Terpenharzen und deren Mischungen oder Derivaten gewählt wird.

15. Lackierprodukt nach Anspruch 13 oder 14, **dadurch gekennzeichnet, dass** das genannte natürliche Klebemittel ein Derivat von Koniferen ist.

## Revendications

1. Procédé de fabrication d'un produit de peinture, **caractérisé en ce qu'**il comprend les phases suivantes :
- une première phase de dissolution, au cours de laquelle au moins un polyhydroxyalcanoate est dissous dans au moins un solvant organique pour obtenir un mélange liant ;
- une phase d'addition d'un agent d'adhérence naturel, qui est effectuée en même temps que la première phase de dissolution ;
- une deuxième phase de dissolution, dans laquelle au moins un émulsifiant est dissous dans l'eau pour obtenir une solution émulsifiante ; ledit émulsifiant étant choisi parmi : l'alcool polyvinylique, les copolymères d'alcool polyvinylique, le polyéthylène glycol, les copolymères de polyéthylène glycol et leurs mélanges ;
- une phase d'émulsion, dans laquelle ledit mélange liant et ladite solution émulsifiante sont émulsionnés ensemble pour obtenir un mélange émulsionné ;
- une phase d'élimination d'au moins une partie dudit solvant organique dudit mélange émulsionné pour obtenir un produit de peinture.

2. Procédé selon la revendication 1, **caractérisé en ce que** ledit solvant organique est un solvant organique halogéné, de préférence du chloroforme.

3. Procédé selon la revendication 1 ou 2, **caractérisé en ce que** dans ladite première phase de dissolution, ledit polyhydroxyalcanoate est dissous dans une quantité comprise entre 2 % et 10 % en poids par rapport à la somme du polyhydroxyalcanoate et du solvant organique.

4. Procédé selon l'une quelconque des revendications précédentes, **caractérisé en ce que**, dans ladite phase d'addition, ledit agent d'adhérence naturel est ajouté dans une quantité comprise entre 10 % et 200 % en poids par rapport au polyhydroxyalcanoate

5. Procédé selon l'une quelconque des revendications précédentes, **caractérisé en ce que**, dans ladite deuxième phase de dissolution, ledit émulsifiant est dissous dans une quantité comprise entre 0,5 % et 10 % en poids par rapport à la solution émulsifiante.

6. Procédé selon l'une quelconque des revendications précédentes, **caractérisé en ce que**, dans ladite phase d'émulsion, ledit mélange liant et ladite solution émulsifiante sont dans un rapport volumique compris entre 0,2 et 9,4.

7. Procédé selon l'une quelconque des revendications précédentes, **caractérisé en ce qu'**il comprend en outre une phase de réticulation au moins partielle dudit produit de peinture, dans laquelle un agent de réticulation est ajouté audit produit de peinture choisi parmi : glutaraldéhyde-bis-(hydrogénosulfite de sodium), acide citrique, chlorure d'aluminium, acide borique, tétraborate de sodium décahydraté, glyoxal, résine de glyoxal, aluminate de sodium, carbonate de zinc et d'ammonium, acide p-toluènesulfonique, acide glyoxylique, acide sulfurique, hydroxyde de calcium, acide phosphonique et leurs mélanges.

8. Procédé selon l'une quelconque des revendications précédentes, **caractérisé en ce que** ledit agent d'adhérence naturel est choisi parmi : la térébenthine, la colophane, la rosine, les résines terpéniques, le caoutchouc naturel, les hydrates de carbone naturels, les protéines naturelles, la lignine, la cire d'abeille, les huiles végétales naturelles, les huiles végétales modifiées chimiquement, les huiles et graisses naturelles récupérées dans l'industrie alimentaire, la gomme laque, la poix et leurs mélanges ou dérivés.

9. Procédé selon la revendication 8, **caractérisé en ce que** ledit agent d'adhérence naturel est choisi parmi la térébenthine, la colophane, la rosine, les résines terpéniques et leurs mélanges ou dérivés.

10. Procédé selon la revendication 8 ou 9, **caractérisé en ce que** ledit agent d'adhérence naturel est dérivé de conifères.

11. Produit de peinture comprenant une émulsion entre une phase dispersante aqueuse et une phase dispersée organique, **caractérisé en ce que** :
- ladite phase dispersante comprend au moins de l'eau et un émulsifiant choisi parmi : l'alcool polyvinylique, les copolymères d'alcool polyvinylique, le polyéthylène glycol, les copolymères de polyéthylène glycol et leurs mélanges ; et.
- ladite phase dispersée comprend au moins un polyhydroxyalcanoate et au moins un agent d'adhérence naturel.

12. Produit de peinture selon la revendication 11, **caractérisé en ce que** ledit polyhydroxyalcanoate est choisi parmi : le poly-3-hydroxybutyrate (PHB), le poly-3-hydroxyvalérate (PHV), le poly-3-hydroxyoctanoate (PHO), le poly-3-hydroxyhexanoate (PHH), le poly(3-hydroxybutyrate-co-3-hydroxyhexanoate) (PHBH), le poly(3-hydroxybutyrate-co-4-hydroxybutyrate) (P(3HB-co-4HB)), poly(3-hydroxyoctanoate-co-3-hydroxyundecen-10-enoate) (PHOU), poly(3-hydroxybutyrate-co-3-hydroxyvalérate) (PHBV), poly(3-hydroxybutyrate-co-3-hydroxyvalérate)-co-4-hydroxyvalérate (PHBV) et leurs mélanges.

13. Produit de peinture selon la revendication 11 ou 12, **caractérisé en ce que** ledit agent d'adhérence naturel est choisi parmi : la térébenthine, la colophane, la rosine, les résines terpéniques, le caoutchouc naturel, les hydrates de carbone naturels, les protéines naturelles, la lignine, la cire d'abeille, les huiles végétales naturelles, les huiles végétales modifiées chimiquement, les huiles et graisses naturelles récupérées dans l'industrie alimentaire, la gomme laque, la poix, et leurs mélanges ou dérivés.

14. Produit de peinture selon la revendication 13, **caractérisé en ce que** ledit agent d'adhérence naturel est choisi parmi la térébenthine, la colophane, la rosine, les résines terpéniques et leurs mélanges ou dérivés.

15. Produit de peinture selon la revendication 13 ou 14, **caractérisé en ce que** ledit agent d'adhérence naturel est dérivé de conifères.
